# EUROPÄISCHE PATENTSCHRIFT

(11) **EP 3 939 138 B1**
(45) Veröffentlichungstag und Bekanntmachung des Hinweises auf die Patenterteilung: **26.08.2026**
(21) Anmeldenummer: 20711873.8
(22) Anmeldetag: 13.03.2020
(51) Int. Cl.: H02J 3/44, H02M 7/5387, H02J 3/26

(54) **VERFAHREN ZUR DREIPHASIGEN EINSPEISUNG IN EIN WECHSELSPANNUNGSNETZ UND DREIPHASIGER WECHSELRICHTER**
METHOD FOR THREE-PHASE SUPPLY INTO AN ALTERNATING VOLTAGE NETWORK, AND THREE-PHASE INVERTER
PROCÉDÉ D'ALIMENTATION TRIPHASÉE DANS UN RÉSEAU DE TENSION ALTERNATIVE ET ONDULEUR TRIPHASÉ

(30) Priorität: 14.03.2019 DE 102019106583
(43) Veröffentlichungstag der Anmeldung: 19.01.2022
(73) Patentinhaber: SMA Solar Technology AG, 34266 Niestetal (DE)
(72) Erfinder: UNRU, Alexander, 34225 Baunatal (DE); WELKER, Moritz, 34289 Zierenberg (DE); BECHTEL, Neidhardt, 34130 Kassel (DE); PAPE, Sybille, 34246 Vellmar (DE)
(86) Internationale Anmeldenummer: PCT/EP2020/056876
(87) Internationale Veröffentlichungsnummer: WO 2020/182985

(56) Entgegenhaltungen:
- EP-A1- 2 348 597
- DE-A1- 102011 085 676
- DE-A1- 102012 220 582
- US-A1- 2005 281 067
- US-A1- 2007 179 720

## Beschreibung

### TECHNISCHES GEBIET DER ERFINDUNG

Die Erfindung betrifft ein Verfahren zur dreiphasigen Einspeisung elektrischer Leistung aus einer Gleichstromquelle in ein dreiphasiges Wechselspannungsnetz mittels eines Wechselrichters sowie einen Wechselrichter, der zur dreiphasigen Einspeisung elektrischer Leistung aus einer Gleichstromquelle in ein dreiphasiges Wechselspannungsnetz eingerichtet ist.

### STAND DER TECHNIK

Wechselrichter, die an ein dreiphasiges Wechselspannungsnetz angeschlossen sind und mit dem Wechselspannungsnetz elektrische Leistung austauschen, arbeiten in der Regel stromeinprägend, indem die über die Wechselstromanschlüsse des Wechselrichters fließenden Wechselströme und damit die ausgetauschte Leistung grundsätzlich von dem Wechselrichter selbst vorgegeben werden. Im Falle eines Photovoltaikgenerators als Gleichstromquelle entspricht die in Wechselstrom umgewandelte und mit dem Wechselspannungsnetz ausgetauschte Leistung regelmäßig der maximal möglichen Leistung des Photovoltaikgenerators.

Ein Wechselrichter kann zusätzlich netzstützende Funktionen erfüllen, indem die ausgetauschte Leistung ggf. mittelbar von Eigenschaften des Wechselspannungsnetzes, z.B. der Frequenz und/oder der Spannung abhängt. Die ausgetauschte Leistung kann dazu im Rahmen der verfügbaren Gleichstromleistung variiert werden, beispielsweise bei einer Abweichung der Netzfrequenz von einer Nennfrequenz des Wechselspannungsnetzes.

Ein Wechselrichter kann ein Wechselspannungsnetz definieren und aufrechterhalten, d.h. netzbildend arbeiten. Im Gegensatz zu einem stromeinprägenden, netzstützenden Betrieb kann ein Wechselrichter zur Netzbildung insbesondere spannungseinprägend betrieben werden, indem die ausgetauschte Leistung unmittelbar von den Eigenschaften des Wechselspannungsnetzes abhängt, d.h. insbesondere eine Funktion der Frequenz und/oder der Spannung im Wechselspannungsnetz ist. Dabei kann ein spannungseinprägender Wechselrichter beispielsweise eine sogenannte Droop-Regelung umfassen oder als sogenannte virtuelle Synchronmaschine betrieben werden. Der Betrieb einer Energieerzeugungsanlage als proaktiver Netzbildner fordert dabei eine deutlich höhere Dynamik der angeschlossenen Gleichstromquelle als der bloß netzstützende und insofern reaktive Betrieb.

Aus der EP1841050A1 ist eine Energieerzeugungsanlage bekannt, die drei einphasige Wechselrichter umfasst, wobei die drei Wechselrichter an jeweils eine der drei Phasen des Wechselspannungsnetzes angeschlossen sind und weitgehend unabhängig voneinander stromeinprägend betrieben werden. Dadurch kann die Energieerzeugungsanlage eine sogenannte Schieflast bilden, indem die einzelnen Wechselrichter unterschiedliche Leistungen mit dem Wechselspannungsnetz austauschen.

Aus der DE102012220582A1 ist ein Verfahren zum dreiphasigen Einspeisen elektrischer Leistung mittels eines Wechselrichters bekannt, bei dem eine Asymmetrie im Wechselspannungsnetz erfasst und in Reaktion darauf vom Wechselrichter ein asymmetrischer Stromanteil eingespeist wird. Dazu ist eine umfangreiche Regelungsstruktur offenbart, die zur entsprechenden Steuerung des Wechselrichters in direkter Reaktion auf eine detektierte Asymmetrie eingerichtet ist.

Aus der EP2348597A1 ist ein Verfahren bekannt, bei dem eine Asymmetrie von Leistungen, die über die drei Phasen eines Netzanschlusspunktes einer elektrischen Anlage fließen, mittels eines Wechselrichters ausgeglichen wird, indem der Wechselrichter auf der Anlagenseite des Netzanschlusspunktes unterschiedliche Leistungen über die drei Phasen mit dem Wechselspannungsnetz austauscht, wobei die Unterschiede der ausgetauschten Leistungen die Asymmetrie gerade kompensieren.

Ein ähnliches Verfahren ist aus der DE102011085676A1 bekannt, wobei eine Einspeisung elektrischer Leistung in ein dreiphasiges Wechselspannungsnetz durch einen Wechselrichter unter Berücksichtigung von Wirk- und Blindleistungen, die an einem Einspeisepunkt ermittelt werden, derart phasenselektiv gesteuert wird, dass Schieflasten am Einspeisepunkt minimiert werden. Dabei ist bevorzugt vorgesehen, dass der Wechselrichter drei einzeln steuerbare Ausgänge zur Verbindung mit je einer Phase des dreiphasigen Wechselstromnetzes aufweist
Aus der DE102010029951A1 ist ein Verfahren zum Einspeisen eines unsymmetrischen dreiphasigen Stroms in ein dreiphasiges Wechselspannungsnetz bekannt, bei dem der unsymmetrische Strom durch eine Überlagerung eines Mitsystems und eines Gegensystems erzeugt wird, wobei je ein Wechselrichtermodul zur Erzeugung des Mitsystems bzw. des Gegensystems vorgesehen ist.

Aus der US 2005/281067 A1 ist ein Verfahren zur Erzeugung unabhängiger Ausgangsspannungen auf verschiedenen Phasen eines mehrphasigen Leistungswandlers bekannt, bei dem ein Steuergerät phasenspezifisch gemessene Netzspannungen empfängt und daraus Ansteuersignale für eine Wechselrichterbrücke des Leistungswandlers erzeugt.

Gemäß Stand der Technik ist somit eine proaktive asymmetrische Einspeisung elektrischer Leistung in ein dreiphasiges Wechselspannungsnetz mittels einer stromeinprägenden Energieerzeugungsanlage bisher nur möglich, indem drei weitgehend unabhängig einspeisende einphasige Wechselrichter oder zwei unabhängig einspeisende dreiphasige Wechselrichter verwendet werden. Alternativ kann eine asymmetrische Einspeisung mittels einer Regelungsstruktur erreicht werden, deren Ergebnis inhärent von den elektrischen Eigenschaften des Wechselspannungsnetz abhängt; insbesondere kann ein spannungseinprägender Wechselrichter zur asymmetrischen Einspeisung verwendet werden, wobei jedoch die Einspeiseleistungen auf den einzelnen Phasen nicht gezielt gesteuert werden können, sondern vielmehr unmittelbar vom Verhalten des angeschlossenen Wechselspannungsnetzes abhängen.

### AUFGABE DER ERFINDUNG

Der Erfindung liegt die Aufgabe zugrunde, ein Verfahren zur asymmetrischen Einspeisung elektrischer Leistung aus einer Gleichstromquelle über einen dreiphasigen stromeinprägenden Wechselrichter in ein dreiphasiges Wechselspannungsnetz aufzuzeigen, bei dem die über die einzelnen Phasen in das Wechselspannungsnetz eingespeisten Ströme bzw. Leistungen einfach und effizient unabhängig voneinander eingestellt werden können.

### LÖSUNG

Die Aufgabe wird durch ein Verfahren mit den Merkmalen des unabhängigen Patentanspruchs 1 sowie einen Wechselrichter gemäß Anspruch 8 gelöst. Bevorzugte Ausführungsformen sind in den abhängigen Patentansprüchen definiert.

### BESCHREIBUNG DER ERFINDUNG

Ein erfindungsgemäßes Verfahren zur dreiphasigen Einspeisung elektrischer Leistung aus einer Gleichstromquelle mittels eines Wechselrichters in ein dreiphasiges Wechselspannungsnetz, wobei der Wechselrichter eine Regelungsstruktur mit einem Regler und einem Multiplizierer aufweist, umfasst die folgenden Schritte:
- Messen von phasenspezifischen Netzspannungen;
- Ermitteln einer Netzfrequenz aus den gemessenen Netzspannungen;
- Erzeugen von phasenspezifischen sinusförmigen Spannungsreferenzwerten mittels einer frequenzselektiven Regelung durch den Regler aus den phasenspezifisch gemessenen Netzspannungen und der ermittelten Netzfrequenz, wobei die Spannungsreferenzwerte phasenspezifische Amplituden und eine gemeinsame Frequenz aufweisen, die den jeweiligen Amplituden der gemessenen Netzspannungen der einzelnen Phasen bzw. der Frequenz der Netzspannungen entsprechen,
- Erzeugen von phasenspezifischen Stromsollwerten durch den Multiplizierer, indem Produkte aus phasenspezifisch vorgegebenen Stromamplitudenzielwerten und den phasenspezifischen Spannungsreferenzwerten gebildet und phasenspezifisch auf jeweilige Netzspannungsamplituden normiert werden,
- Verwenden der phasenspezifischen Stromsollwerte zum Ansteuern von Leistungsschaltern des Wechselrichters.

In dem Verfahren werden somit vorgegebene Stromamplitudenzielwerte erfindungsgemäß phasenspezifisch mit Spannungsreferenzwerten multipliziert, wobei die phasenspezifischen Spannungsreferenzwerte (direkt) aus den gemessenen Netzspannungen erzeugt wurden und mathematisch sinusförmige Verläufe aufweisen, deren Amplituden und Frequenz synchron zu den Netzspannungen der einzelnen Phasen verläuft. Nach einer erfindungsgemäßen phasenspezifischen Normierung auf die ermittelten Netzspannungsamplituden steht damit eine einfache Abbildung der Stromamplitudenzielwerte in passende Stromsollwerte zur Verfügung, insbesondere ohne eine vergleichsweise aufwändige Koordinatentransformation durchführen zu müssen. Die resultierenden Stromsollwerte sind wiederum phasenspezifisch und weisen einen sinusförmigen Zeitverlauf auf. Damit sind die Stromsollwerte geeignet, als Sollwerte für eine an sich bekannte Ansteuerung von Leistungsschaltern des Wechselrichters verwendet zu werden, beispielsweise im Rahmen einer herkömmlichen Pulsbreitenmodulation (PWM).

In einer Ausführungsform des Verfahrens umfasst der Regler zum Erzeugen der Spannungsreferenzwerte einen Filter, insbesondere einen Bandpassfilter, oder einen Verallgemeinerten Integrator umfasst. Insbesondere ein Verallgemeinerter Integrator (engl. "Second Order Generalized Integrator") ist vorteilhaft zur Bestimmung der phasenspezifischen sinusförmigen Spannungsreferenzwerten geeignet, da die Ausgangswerte des Verallgemeinerten Integrators den grundsätzlichen netzfrequenten Verlauf einer sinusförmigen Netzspannung exakt nachbilden können, ohne von höherfrequenten Störungen beeinflusst zu sein.

Die Stromamplitudenzielwerte können derart vorgegeben werden, dass auf den Phasen individuell vorgegebene Wirkleistungen eingespeist werden. In herkömmlichen Verfahren wird lediglich eine insgesamt auszutauschende elektrische Leistung, mithin eine Summenleistung über alle Phasen vorgegeben und muss je nach verwendetem Koordinatensystem über komplexe Transformationen in Sollwerte umgerechnet werden. In dem erfindungsgemäßen Verfahren ist es dagegen ohne weiteres möglich, die Wirkleistungen für die einzelnen Phasen mittels der Stromamplitudenzielwerte individuell vorzugeben, da die Umrechnung in phasenspezifische Stromsollwerte direkt aus den Stromamplitudenzielwerten in Verbindung mit den Spannungsreferenzwerten erfolgt.

Insbesondere können die Stromamplitudenzielwerte vorteilhaft derart vorgegeben werden, dass die ausgetauschten Wirkleistungen auf allen Phasen im Wesentlichen denselben Betrag aufweisen. Dadurch kann ein komplett symmetrischer Betrieb des Wechselrichters gewährleistet werden.

Alternativ können die Stromamplitudenzielwerte vorteilhaft derart vorgegeben werden, dass auf mindestens einer der Phasen eine Wirkleistung mit gegebenem Vorzeichen mit dem Wechselspannungsnetz ausgetauscht wird, während auf mindestens einer der anderen Phasen eine Wirkleistung mit einem umgekehrten Vorzeichen ausgetauscht wird. Mithin ermöglicht es das Verfahren auf einfache und vorteilhafte Weise, derart asymmetrische Leistungen zu erzeugen, dass auf einer Phase Leistung vom Wechselrichter ins Wechselspannungsnetz fließt, während gleichzeitig auf einer anderen Phase Leistung aus dem Wechselspannungsnetz in den Wechselrichter fließt. Dieses Merkmal kann besonders vorteilhaft genutzt werden, wenn im Wechselspannungsnetz bereits eine signifikante Asymmetrie hinsichtlich der Leistungsflüsse in den einzelnen Phasen vorliegt.

In einer vorteilhaften Ausführungsform des Verfahrens können mittels eines weiteren Multiplizierers Produkte aus phasenspezifisch vorgegebenen Blindstrom¬amplitudenzielwerten und jeweils um 90 Grad phasenverschobenen phasenspezifischen Spannungsreferenzwerten gebildet und zu den Produkten aus den phasenspezifisch vorgegebenen Stromamplitudenzielwerten und den phasenspezifischen Spannungsreferenzwerten addiert werden. Die resultierenden Summenwerte können sodann phasenspezifisch auf die jeweiligen Netzspannungsamplituden normiert werden. Es ergeben sich dadurch Stromsollwerte, die sowohl Wirkstrom- als auch Blindstromanteile enthalten und als Sollwerte von der Ansteuerung der Leistungsschalter des Wechselrichters verwendet werden können, so dass die Ausgangsströme des Wechselrichters phasenspezifisch sowohl Wirk- als auch Blindleistungen umfassen. Dabei können die Blindstromamplitudenzielwerte derart vorgegeben werden, dass auf den Phasen individuell vorgegebene Blindleistungen eingespeist werden.

Ein erfindungsgemäßer Wechselrichter zur dreiphasigen Einspeisung elektrischer Leistung ist in Anspruch 8 definiert.

### KURZBESCHREIBUNG DER FIGUREN

Im Folgenden wird die Erfindung anhand in den Figuren dargestellter Ausführungsbeispiele weiter erläutert und beschrieben.
- Fig. 1: zeigt eine an ein Wechselspannungsnetz angeschlossene Energieerzeugungsanlage;
- Fig. 2: zeigt eine Ausführungsform einer Regelungsstruktur eines Wechselrichters; und
- Fig. 3: zeigt eine weitere Ausführungsform einer Regelungsstruktur eines Wechselrichters.

### FIGUREN BESCHREIBUNG

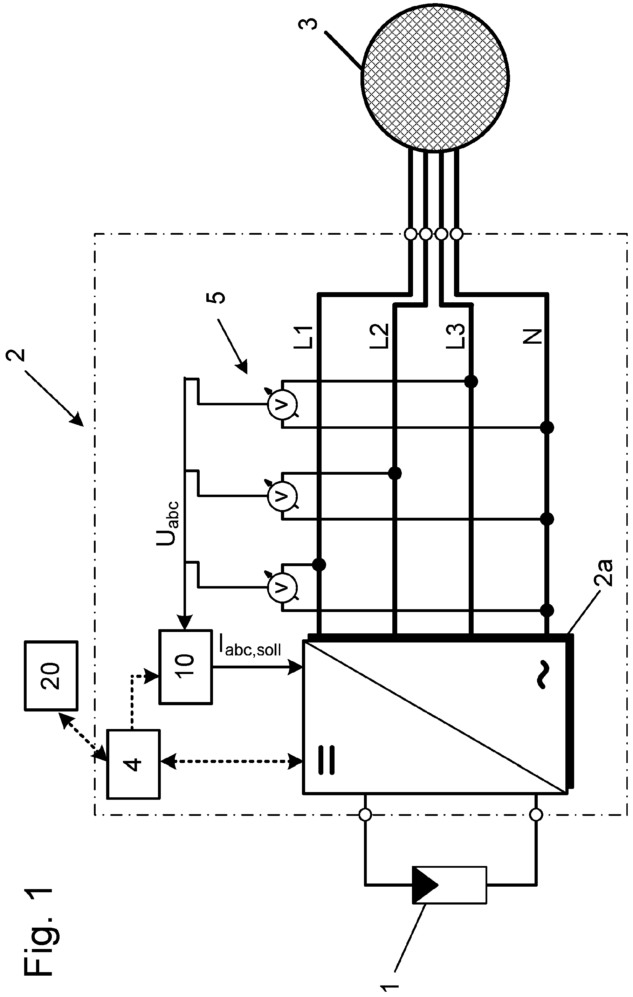

**Fig. 1** zeigt eine vereinfachte Darstellung einer an ein Wechselspannungsnetz 3 angeschlossenen Energieerzeugungsanlage. Die Energieerzeugungsanlage umfasst einen Wechselrichter 2, der aus einer Gleichstromquelle 1, in Fig. 1 beispielhaft als Photovoltaikgenerator dargestellt, eine elektrische Leistung entnimmt, diese in einen Wechselstrom umwandelt und über die Phasenleiter L1, L2, L3 und ggf. den Neutralleiter N in das Wechselspannungsnetz 3 einspeist. Dazu umfasst der Wechselrichter 2 insbesondere eine Wechselrichterbrücke 2a, die eine Anzahl an Leistungshalbleitern umfasst, die insbesondere in Form einer Brückenschaltung zwischen den Gleichstromeingängen und den Wechselstromausgängen des Wechselrichters 2 angeordnet sein kann. Die Leistungshalbleiter werden mittels einer geeigneten Taktung derart angesteuert, so dass durch ein getaktetes Anlegen der eingangsseitigen Gleichspannung an die Wechselstrom-ausgänge des Wechselrichters 2 Wechselströme auf den Phasenleitern L1, L2, L3 und ggf. N angeregt werden, die phasenspezifisch vorgebbaren Stromsollwerten I_abc_soll entsprechen. Dazu kann die Wechselrichterbrücke 2a eine aus dem Stand der Technik bekannte interne Ansteuerung umfassen, die hier nicht näher ausgeführt wird.

Der Wechselrichter 2 weist eine Steuerung 4 auf, die insbesondere für die Betriebsführung des Wechselrichters 2 verantwortlich ist. Dazu umfasst die Steuerung 4 beispielsweise Funktionen wie Starten und Stoppen des Wechselrichters 2, Einstellen und Optimieren der Spannung am Gleichstromeingang des Wechselrichters, Fehlerüberwachung und ähnliches. Insbesondere kann die Steuerung 4 mit der Wechselrichterbrücke 2a zusammenwirken, indem Messwerte aus der Wechselrichterbrücke 2a an die Steuerung 4 übertragen werden und/oder indem die Steuerung 4 grundlegende Betriebszustände der Wechselrichterbrücke 2a vorgibt, z.B. einen Normalbetrieb oder eine Notabschaltung.

Darüber hinaus kann die Steuerung 4 mit einer weiteren externen Mess- oder Steuereinheit 20 verbunden sein und Daten austauschen. Bei der externen Mess- oder Steuereinheit 20 kann es sich beispielsweise um eine Leistungsmesseinrichtung an einem Netzanschlusspunkt des Wechselrichter 2 zum Wechselspannungsnetz 3 handeln. Alternativ oder zusätzlich kann die externe Mess- oder Steuereinheit 20 eine Steuereinheit einer Energieerzeugungsanlage sein, die neben dem Wechselrichter 2 weitere elektrische Einrichtungen wie Messstellen, Erzeuger, Speicher und/oder Verbraucher umfasst, wobei die Steuereinheit 20 einer solchen Anlage mit mehreren der weiteren elektrischen Einrichtungen der Anlage verbunden sein und ggf. deren elektrisches Verhalten beeinflussen oder steuern kann.

Der Wechselrichter 2 umfasst weiterhin eine Regelungsstruktur 10. Die Regelungsstruktur 10 ist mit Spannungsmessmitteln 5 verbunden, die jeweils einem der Phasenleiter L1, L2 bzw. L3 sowie mit dem Neutralleiter N zugeordnet sind. Die Spannungsmessmittel 5 erfassen die Netzspannungen U_abc der einzelnen Phasen. Die Regelungsstruktur 10 empfängt von den Spannungsmessmitteln 5 die gemessenen Netzspannungen U_abc. Für den Aufbau geeigneter Spannungsmessmittel 5 sind dem Fachmann aus dem Stand der Technik verschiedene Ausführungsformen bekannt, so dass die konkrete Ausführung der Spannungsmessmittel 5 gemäß Fig. 1 lediglich beispielhaft zu verstehen ist.

Die Regelungsstruktur 10 ist weiterhin mit der Steuerung 4 des Wechselrichters 2 verbunden. Die Steuerung 4 übermittelt Parameter an die Regelungsstruktur 10. Die Regelungsstruktur 10 ist dazu eingerichtet, phasenspezifische Stromsollwerte I_abc_soll an die Wechselrichterbrücke 2a auszugeben, wobei die Stromsollwerte I_abc_soll durch die Regelungsstruktur 10 in Abhängigkeit von den Parametern der Steuerung 4 und von den gemessenen Netzspannungen U_abc ermittelt werden. Die Wechselrichterbrücke 2a empfängt die Stromsollwerte I_abc_soll und erzeugt anhand einer an sich bekannten internen Ansteuerung der Leistungshalbleiter der Wechselrichterbrücke 2a getaktete Ausgangsspannungen, die dazu geeignet sind, Ausgangsströme anzuregen, die sich an den Stromsollwerten I_abc_soll orientieren und diesen insbesondere im Normalbetrieb des Wechselrichters 2 weitgehend entsprechen.

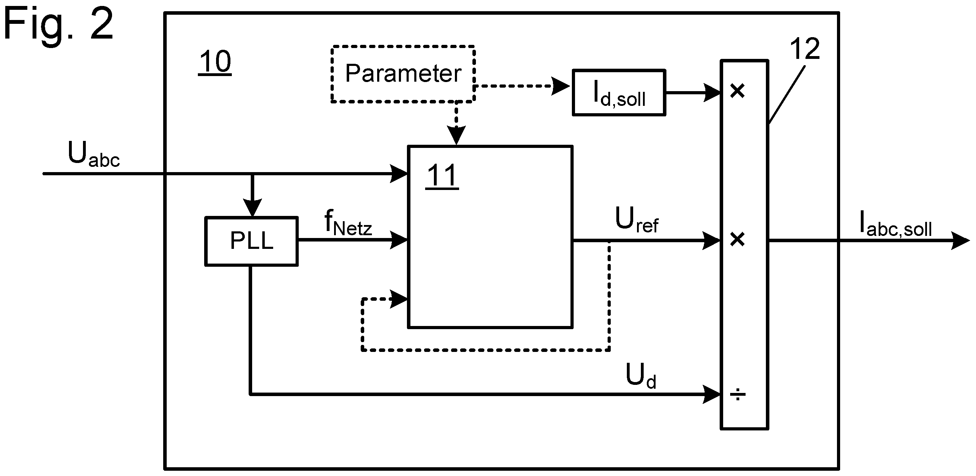

**Fig. 2** zeigt eine schematische Darstellung der Regelungsstruktur 10 des Wechselrichters 2. Die Regelungsstruktur 10 umfasst einen Regler 11. Der Regler 11 empfängt verschiedene Eingangsgrößen. Diese Eingangsgrößen umfassen allgemeine Parameter, die insbesondere von der Steuerung 4 des Wechselrichters 2 vorgegeben sein können, sowie die gemessenen Netzspannungen U_abc. Weiterhin gehört eine Netzfrequenz f_Netz zu den Eingangsgrößen des Reglers 11, wobei die Netzfrequenz f_Netz aus den gemessenen Netzspannungen U_abc ermittelt werden kann, beispielsweise mittels einer Phasenregelschleife PLL oder eines anderen gängigen Verfahrens.

Aus den Momentanwerten der Netzspannungen U_abc der drei Phasen des Wechselspannungsnetzes 2 und der Netzfrequenz f_Netz ermittelt der Regler 11 momentane Spannungsreferenzwerte U_ref für die drei Phasen und gibt diese aus. Zusätzlich kann eine Rückkopplung der ausgegebenen Spannungsreferenzwerte U_ref auf einen Eingang des Reglers 11 vorgesehen sein.

Der Regler 11 ist derart ausgelegt, dass die Spannungsreferenzwerte U_ref einerseits abweichend von den real gemessenen Netzspannungen U_abc einen ideal sinusförmigen Verlauf aufweisen, d.h. drei gegeneinander phasenversetzten Sinusfunktionen folgen. Andererseits entsprechen sowohl die Amplituden der Spannungsreferenzwerte U_ref den Amplituden der gemessenen Netzspannungen U_abc als auch die Frequenz der Spannungsreferenzwerte U_ref der Netzfrequenz f_Netz.

Somit bilden die Spannungsreferenzwerte U_ref die Verläufe der Netzspannungen in idealisierter Form nach, indem die Spannungsreferenzwerte U_ref hinsichtlich Frequenz und Amplitude netzspannungssynchrone Sinusverläufe aufweisen. Dies wird erreicht, indem der Regler 11 eine frequenzselektive Regelung umfasst. Dazu ist beispielsweise ein Bandpassfilter geeignet. Durch die Rückkopplung der Spannungsreferenzwerte U_ref an den Regler 11, ggf. nach einer Skalierung und/oder Verzögerung, kann insbesondere ein sogenannter Verallgemeinerter Integrator als Regler 11 eingesetzt werden, um die Ermittlung der Spannungsreferenzwerte U_ref weiter verbessert auszugestalten.

Die Regelungsstruktur 1 umfasst weiterhin einen Multiplizierer 12. Der Multiplizierer 12 empfängt die phasenspezifischen Spannungsreferenzwerte U_ref vom Regler 11 und phasenspezifische Netzspannungsamplituden U_d, die beispielsweise über die Phasenregelschleife PLL aus den gemessenen Netzspannungen U_abc ermittelt werden können.

An einem weiteren Eingang des Multiplizierers 12 werden phasenspezifische Stromamplitudenzielwerte I_d_soll zur Verfügung gestellt. Die Stromamplitudenzielwerte I_d_soll können insbesondere aus drei Werten bestehen, die die gewünschten Amplituden der Ausgangsströme des Wechselrichters 2 für die drei Phasen des Wechselspannungsnetzes 3 vorgeben. Die gleichzeitig für die drei Phasen geltenden Stromamplitudenzielwerte I_d_soll können dabei grundsätzlich weitgehend frei gewählt werden, zumindest im Rahmen der Leistungsfähigkeit der an den Wechselrichter 2 angeschlossenen Gleichstromquelle 1. Insbesondere ist es möglich, sowohl identische als auch deutlich unterschiedliche Stromamplitudenzielwerte I_d_soll für die einzelnen Phasen vorzugeben, wobei die Stromamplitudenzielwerte I_d_soll auch unterschiedliche Vorzeichen aufweisen können, d.h. unterschiedliche Flussrichtungen der Wirkleistung vom Wechselrichter 2 in das Wechselspannungsnetz 3 bzw. umgekehrt repräsentieren.

Die Stromamplitudenzielwerte I_d_soll können entsprechend Fig. 2 in der Regelungsstruktur 10 erzeugt werden, insbesondere in Abhängigkeit von den Parametern, die von der Steuerung 4 des Wechselrichters 2 an die Regelungsstruktur 10 übermittelt werden. Alternativ können die Stromamplitudenzielwerte I_d_soll auch von der Steuerung 4 direkt an den Multiplizierer 12 übermittelt werden.

In dem Multiplizierer 12 werden die Stromamplitudenzielwerte I_d_soll phasenindividuell mit den netzfrequenten Spannungsreferenzwerten U_ref multipliziert und durch die phasenindividuellen Netzspannungsamplituden U_d dividiert. Als Ergebnis gibt der Multiplizierer 12 phasenindividuelle Stromsollwerte I_abc soll aus, die auf die tatsächliche Amplitude der Netzspannung der jeweiligen Phase normiert sind.

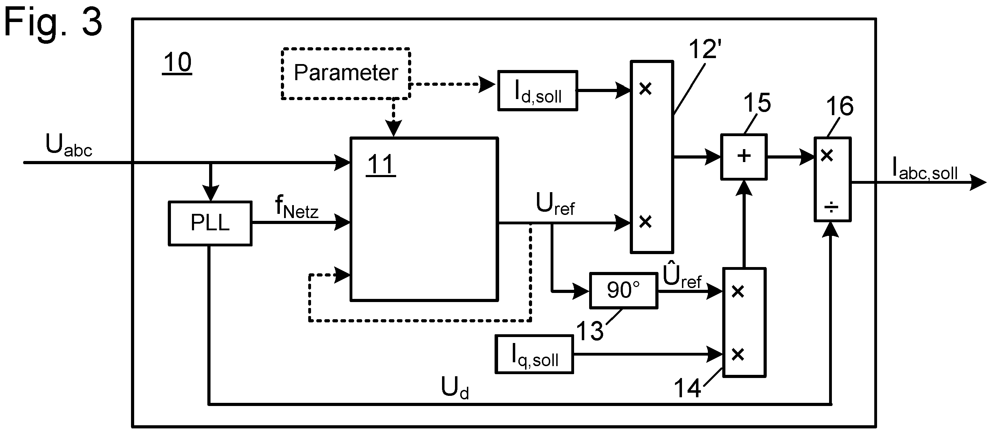

**Fig. 3** zeigt eine erweiterte Ausführungsform des erfindungsgemäßen Verfahrens. Ergänzend zu der Ausführungsform gemäß Fig. 2 werden in der Ausführungsform gemäß Fig. 3 vorgegebene Blindstromamplitudenzielwerte I_q_soll verarbeitet. Die Stromamplitudenzielwerte I_d_soll geben die gewünschten Amplituden der Ausgangsströme des Wechselrichters 2 vor, die jeweils in Phase mit den Netzspannungen auf den einzelnen Phasen sind, so dass die Stromamplitudenzielwerten I_d_soll mittelbar die phasenspezifischen Wirkleistungen vorgeben. Die Blindstromamplitudenzielwerte I_q_soll dagegen geben gewünschte phasenspezifische Amplituden von Ausgangsströmen des Wechselrichters 2 vor, die gegenüber den Netzspannungen auf den einzelnen Phasen jeweils um 90 Grad phasenverschoben sind, so dass die Blindstromamplitudenzielwerte I_q_soll mittelbar phasenspezifische Blindleistungen vorgeben. Es versteht sich, dass diese Phasenverschiebung wahlweise einer Unter- oder einer Übererregung entsprechen kann, d.h. ein positives oder negatives Vorzeichen aufweisen kann.

Konkret können die Spannungsreferenzwerte U_ref mittels eines Phasenschiebers 13 um 90 Grad phasenverschoben werden. Der Phasenschieber 13 kann dazu beispielsweise eine Transformation in ein Alpha-Beta-0-Koordinatensystem und zurück umfassen, wobei die Phasenverschiebung um 90 Grad im Alpha-Beta-0-Koordinatensystem besonders einfach durchgeführt werden kann. Die derart phasenverschobenen Spannungsreferenzwerte Û_ref werden in einem zweiten Multiplizierer 14 mit den vorgegebenen Blindstromamplitudenzielwerten I_q_soll multipliziert. Die Multiplikation im Multiplizierer 14 ergibt Blindstromsollwerte, die in einem Addierer 15 zu Wirkstromsollwerten addiert werden, die mittels des Multiplizierers 12' entsprechend Fig. 2 aus den Spannungsreferenzwerten U_ref und den Stromamplitudenzielwerten I_d_soll erzeugt werden.

Die vom Addierer 15 berechnete Summe der Wirk- und Blindstromsollwerte wird in einem weiteren Multiplizierer 16 durch die phasenindividuellen Netzspannungsamplituden U_d dividiert. Als Ergebnis gibt der Multiplizierer 16 phasenindividuelle Stromsollwerte I_abc_soll aus, die sowohl Wirkstrom- aus auch Blindstromanteile umfassen und auf die tatsächliche Amplitude der Netzspannung der jeweiligen Phase normiert sind.

Die derart gemäß Fig. 2 oder Fig. 3 berechneten Stromsollwerte I_abc_soll werden gemäß Fig. 1 zur Ansteuerung der Leistungshalbleiterschalter der Wechselrichterbrücke 2a verwendet. Dazu kann die Wechselrichterbrücke 2a eine aus dem Stand der Technik bekannte interne Ansteuerung umfassen, die dafür sorgt, dass die Leistungshalbleiter der Wechselrichterbrücke 2a derart getaktet werden, dass die vom Wechselrichter 2 in das Wechselspannungsnetz 3 eingespeisten Ströme den von der Regelungsstruktur 10 vorgegebenen Stromsollwerten I_abc_soll entsprechen. Derartige Regelkreise sind dem Fachmann bekannt, beispielsweise als AC-Stromregler mit Pulsweitenmodulation (PWM), und daher hier nicht näher ausgeführt.

In konkreten Ausführungsformen der Erfindung können die Stromamplitudenzielwerte derart gewählt werden, dass mindestens eines der folgenden Ziele erreicht wird.

### Charakterisierung von Bauteilen des Wechselrichters 2:

Zur Charakterisierung von Bauteilen des Wechselrichters 2 kann ein Prüfschritt vorgesehen sein, der ggf. zeitlich separat von einem Normalbetrieb des Wechselrichters 2 durchgeführt werden kann. Konkret kann eine Kapazität eines üblicherweise geteilten Gleichspannungszwischenkreises eines Neutralpunkt-geklemmten (NPC) Wechselrichters 2 ermittelt werden, indem für zwei der drei Phasen je ein positiver Stromamplitudenzielwert I_d_soll vorgegeben wird, während für die dritte der drei Phasen ein negativer Stromamplitudenzielwert I_d_soll vorgegeben wird, wobei die Summe der Stromamplitudenzielwert I_d_soll gleich null ist. Mittels der erfindungsgemäßen Regelungsstruktur 10 wird die Wechselrichterbrücke 2a dazu veranlasst, entsprechende Ströme in den Phasen L1, L2, L3 zu erzeugen. Im Ergebnis des derartigen Betriebs des Wechselrichters 2 sind die Ströme auf den Phasen mit positivem Stromamplitudenzielwert I_d_soll gleichphasig mit dem Verlauf der Netzspannung U_abc auf diesen Phasen, während der Strom in der Phase mit negativem Stromamplitudenzielwert I_d_soll gegenphasig zum Verlauf der Netzspannung U_abc dieser Phase ist. Da die Summe der Stromamplitudenzielwerte I_d_soll gleich null gewählt wurde, wird insgesamt keine Wirkleistung mit dem Wechselspannungsnetz 3 ausgetauscht. Aufgrund des sinusförmigen Verlaufs der Wechselströme entsteht jedoch eine dynamische Umverteilung der Energie in den beiden Hälften des Gleichspannungszwischenkreises. Diese dynamische Umverteilung lässt sich messtechnisch erfassen und auswerten, um die Teil-Kapazitäten des Gleichspannungszwischenkreises zu ermitteln.

### Reale Nulleinspeisung:

In einer Anlage, die mehrere, insbesondere einphasig angeschlossene elektrische Einheiten umfasst, die über einen gemeinsamen Netzanschlusspunkt an das Wechselspannungsnetz 3 angeschlossen sind, kann es zu asymmetrischen Leistungsflüssen am Netzanschlusspunkt kommen, wobei auf einzelnen Phasen Leistung aus dem Wechselspannungsnetz 2 in die Anlage fließt, während auf anderen Phasen Leistung von der Anlage in das Wechselspannungsnetz 2 fließt. Dem kann entgegengewirkt werden, indem die Leistungen am Netzanschlusspunkt phasenspezifisch gemessen werden und die Stromamplitudenzielwerte I_d_soll so modifiziert werden, beispielsweise von einer zentralen Anlagensteuerung 20 oder der Steuerung 4 des Wechselrichters 2 selbst, dass die Leistungen am Netzanschlusspunkt für jede Phase einzeln auf einen vorgegebenen Wert, insbesondere auf null geregelt wird.

### Sicherungsschutz.

Analog zur Nulleinspeisung kann die am Netzanschlusspunkt über einzelne Phasen fließende Leistung begrenzt werden, indem entsprechend gegenläufige Änderungen der Stromamplitudenzielwette I_d_soll für die betroffene Phase vorgegeben werden. Dadurch können effektiv Überströme auf einzelnen Phasen verhindert werden, solange die Summe der Leistungen auf allen Phasen kleiner als eine insgesamt am Netzanschlusspunkt zulässige Leistung ist.

### BEZUGSZEICHENLISTE

- 1: Gleichstromquelle
- 2: Wechselrichter
- 3: Wechselspannungsnetz
- 4: Steuerung
- 5: Spannungsmessmittel
- 10: Regelungsstruktur
- 11: Regler
- 12, 12 ': Multiplizierer
- 13: Phasenschieber
- 14: Multiplizierer
- 15: Addierer
- 16: Multiplizierer
- 20: Mess- oder Steuereinheit

- L1, L2, L3: Phasenleiter
- N: Neutralleiter

- U_abc: Netzspannungen
- I_abc_soll: Strom¬sollwerte
- f_Netz: Netzfrequenz

- U_ref, Ü_ref: Spannungsreferenzwerte
- U_d: Netzspannungsamplituden
- I_d_soll: Stromamplitudenzielwerte
- I_q_soll: Blindstromamplitudenzielwerte

## Patentansprüche

1. Verfahren zur dreiphasigen Einspeisung elektrischer Leistung aus einer Gleichstromquelle (1) mittels eines Wechselrichters (2) in ein dreiphasiges Wechselspannungsnetz (3), wobei der Wechselrichter (2) eine Regelungsstruktur (10) aufweist, wobei die Regelungsstruktur (10) einen Regler (11) und einen Multiplizierer (12) umfasst, mit den folgenden Schritten:
- Messen von phasenspezifischen Netzspannungen (U_abc);
- Ermitteln einer Netzfrequenz (f_Netz) aus den gemessenen Netzspannungen (U_abc);
- Erzeugen von phasenspezifischen sinusförmigen Spannungsreferenzwerten (U_ref) mittels einer frequenzselektiven Regelung durch den Regler (11) aus den phasenspezifisch gemessenen Netzspannungen (U_abc) und der ermittelten Netzfrequenz (f_Netz), wobei die Spannungsreferenzwerte (U_ref) phasenspezifische Amplituden und eine gemeinsame Frequenz aufweisen, die den jeweiligen Amplituden bzw. der Frequenz der gemessenen Netzspannungen (U_abc) der einzelnen Phasen entsprechen,
- Erzeugen von phasenspezifischen Stromsollwerten (I_abc_soll) durch den Multiplizierer (12, 12'), indem Produkte aus phasenspezifisch vorgegebenen Stromamplitudenzielwerten (I_d_soll) und den phasenspezifischen Spannungsreferenzwerten (U_ref) gebildet und phasenspezifisch auf jeweilige Netzspannungsamplituden (U_d) normiert werden,
- Verwenden der phasenspezifischen Stromsollwerte (I_abc_soll) zum Ansteuern von Leistungsschaltern des Wechselrichters.

2. Verfahren nach Anspruch 1, wobei der Regler (11) zum Erzeugen der Spannungsreferenzwerte (U_ref) einen Bandpassfilter oder einen Verallgemeinerten Integrator umfasst.

3. Verfahren nach einem der Ansprüche 1 bis 2, wobei die Stromamplitudenzielwerte (I_d_soll) derart vorgegeben werden, dass auf den Phasen individuell vorgegebene Wirkleistungen eingespeist werden.

4. Verfahren nach einem der Ansprüche 1 bis 3, wobei die Stromamplitudenzielwerte (I_d_soll) derart vorgegeben werden, dass auf allen Phasen im Wesentlichen die gleiche Wirkleistung eingespeist wird.

5. Verfahren nach einem der Ansprüche 1 bis 3, wobei die Stromamplitudenzielwerte (I_d_soll) derart vorgegeben werden, dass auf mindestens einer der Phasen eine Wirkleistung eingespeist wird, die ein umgekehrtes Vorzeichen im Vergleich zu einer Wirkleistung auf mindestens einer anderen Phase aufweist.

6. Verfahren nach einem der vorangehenden Ansprüche, wobei mittels eines weiteren Multiplizierers (16) Produkte aus phasenspezifisch vorgegebenen Blindstromamplitudenzielwerten (I_q_soll) und jeweils um 90 Grad phasenverschobenen phasenspezifischen Spannungsreferenzwerten (Û_ref) gebildet und zu den Produkten aus den phasenspezifisch vorgegebenen Stromamplitudenzielwerten (I_d_soll) und den phasenspezifischen Spannungsreferenzwerten (U_ref) addiert werden, wobei die resultierenden Summenwerte phasenspezifisch auf die jeweiligen Netzspannungsamplituden (U_d) normiert werden.

7. Verfahren nach Anspruch 6, wobei die Blindstromamplitudenzielwerte (I_q_soll) derart vorgegeben werden, dass auf den Phasen individuell vorgegebene Blindleistungen eingespeist werden.

8. Wechselrichter (2) zur dreiphasigen Einspeisung elektrischer Leistung aus einer Gleichstromquelle (1) in ein dreiphasiges Wechselspannungsnetz (3), wobei der Wechselrichter (2) Spannungsmessmittel (5) zur Erfassung von phasenspezifischen Netzspannungen (U_abc), eine Regelungsstruktur (10) und eine Wechselrichterbrücke (2a) aufweist, wobei die Regelungsstruktur (10) dazu eingerichtet ist, die gemessenen Netzspannungen (U_abc) von den Spannungsmessmitteln (5) zu empfangen, ein Verfahren gemäß einem der vorangehenden Ansprüche auszuführen und phasenspezifische Stromsollwerte (I_abc_soll) an die Wechselrichterbrücke (2a) auszugeben.

## Claims

1. A method for three-phase infeed of electrical power from a DC source (1) into a three-phase AC grid (3) by means of an inverter (2), wherein the inverter (2) has a regulation structure (10), wherein the regulation structure (10) comprises a regulator (11) and a multiplier (12), comprising the following steps:
- measuring phase-specific grid voltages (U_abc);
- determining a grid frequency (f_grid) from the measured grid voltages (U_abc);
- generating phase-specific sinusoidal voltage reference values (U_ref) by means of frequency-selective control of the regulator (11) from the phase-specifically measured grid voltages (U_abc) and the determined grid frequency (f_grid), wherein the voltage reference values (U_ref) have phase-specific amplitudes and a common frequency corresponding to the respective amplitudes and frequency of the measured grid voltages (U_abc) of the individual phases,
- generating phase-specific target current values (I_abc_target) by means of the multiplier (12, 12') by forming products of phase-specifically predefined target current amplitude values (I_d_target) and the phase-specific voltage reference values (U_ref) and normalizing them phase-specifically to respective grid voltage amplitudes (U_d),
- using the phase-specific target current values (I_abc_target) for driving power switches of the inverter.

2. The method as claimed in claim 1, wherein the regulator (11)for generating the voltage reference values (U_ref) comprises a bandpass filter or a generalized integrator.

3. The method as claimed in either of claims 1 and 2, wherein the target current amplitude values (I_d_target) are predefined in such a way that individually predefined active powers are fed in on the phases.

4. The method as claimed in any of claims 1 to 3, wherein the target current amplitude values (I_d_target) are predefined in such a way that substantially the same active power is fed in on all of the phases.

5. The method as claimed in any of claims 1 to 3, wherein the target current amplitude values (I_d_target) are predefined in such a way that on at least one of the phases an active power is fed in which has an opposite sign in comparison with an active power on at least one other phase.

6. The method as claimed in any of the preceding claims, wherein, by means of a further multiplier (16), products of phase-specifically predefined target reactive current amplitude values (I_q_target) and phase-specific voltage reference values (Û_ref) phase-shifted by 90 degrees in each case are formed and added to the products of the phase-specifically predefined target current amplitude values (I_d_target) and the phase-specific voltage reference values (U_ref), wherein the resulting summation values are normalized phase-specifically to the respective grid voltage amplitudes (U_d).

7. The method as claimed in claim 6, wherein the target reactive current amplitude values (I_q_target) are predefined in such a way that individually predefined reactive powers are fed in on the phases.

8. An inverter (2) for three-phase infeed of electrical power from a DC source (1) into a three-phase AC grid (3), wherein the inverter (2) comprises voltage measuring means (5) for detecting phase-specific mains voltages (U_abc), a control structure (10) and an inverter bridge (2a), wherein the control structure (10) is configured to receive the measured grid voltages (U_abc) from the voltage measurement means (5), to execute a method in accordance with one of the preceding claims, and to output phase-specific current setpoints (I_abc_set) to the inverter bridge (2a).

## Revendications

1. Procédé d'injection triphasée de puissance électrique provenant d'une source de courant continu (1) au moyen d'un onduleur (2) dans un réseau triphasé à tension alternative (3), l'onduleur (2) comportant une structure de régulation (10), laquelle comprend un régulateur (11) et un multiplicateur (12), comprenant les étapes suivantes :
- mesure des tensions de réseau spécifiques à chaque phase (U_abc) ;
- détermination d'une fréquence du réseau (f_Netz) à partir des tensions du réseau mesurées (U_abc) ;
- génération de valeurs de référence de tension sinusoïdales spécifiques à chaque phase (U_ref) au moyen d'une régulation sélective en fréquence réalisée par le régulateur (11) à partir des tensions du réseau mesurées spécifiquement pour chaque phase (U_abc) et de la fréquence du réseau déterminée (f_Netz), les valeurs de référence de tension (U_ref) présentant des amplitudes spécifiques à chaque phase et une fréquence commune qui correspondent respectivement aux amplitudes et à la fréquence des tensions de réseau mesurées (U_abc) des différentes phases,
- Génération de valeurs de consigne de courant spécifiques à chaque phase (I_abc-soll) par le multiplicateur (12, 12'), en formant les produits entre les valeurs cibles d'amplitude de courant spécifiées pour chaque phase (I_d_soll) et des valeurs de référence de tension spécifiques à chaque phase (U_ref), puis normalisation de ces produits par phase par rapport aux amplitudes respectives des tensions du réseau (U_d),
- Utilisation des valeurs de consigne de courant spécifiques à chaque phase (I_abc_soll) pour commander les commutateurs de puissance de l'onduleur.

2. Procédé selon la revendication 1, dans lequel le régulateur (11) comprend, pour générer les valeurs de référence de tension (U_ref), un filtre passe-bande ou un intégrateur généralisé.

3. Procédé selon l'une des revendications 1 à 2, dans lequel les valeurs cibles d'amplitude de courant (I_d_soll) sont prédéfinies de telle sorte que des puissances actives prédéfinies individuellement soient injectées sur les phases.

4. Procédé selon l'une des revendications 1 à 3, dans lequel les valeurs cibles d'amplitude de courant (I_d_soll) sont prédéfinies de telle sorte qu'une puissance active sensiblement identique soit injectée sur toutes les phases.

5. Procédé selon l'une des revendications 1 à 3, dans lequel les valeurs cibles d'amplitude de courant (I_d_soll) sont prédéfinies de telle sorte qu'une puissance active soit injectée sur au moins l'une des phases, laquelle puissance active présente un signe opposé à celui d'une puissance active sur au moins une autre phase.

6. Procédé selon l'une des revendications précédentes, dans lequel, à l'aide d'un autre multiplicateur (16), on forme des produits à partir de valeurs cibles d'amplitude de courant réactif spécifiques à chaque phase (I_q_soll) et de valeurs de référence de tension spécifiques à chaque phase (Û_ref), déphasées de 90 degrés, sont forme et additionnés aux produits issus des valeurs cibles d'amplitude de courant spécifiques à chaque phase (I_d_soll) et des valeurs de référence de tension spécifiques à chaque phase (U_ref), les valeurs de somme résultantes étant normalisées, pour chaque phase, par rapport aux amplitudes respectives de la tension du réseau (U_d).

7. Procédé selon la revendication 6, dans lequel les valeurs cibles d'amplitude de courant réactif (I_q_soll) sont prédéfinies de telle sorte que des puissances réactives prédéfinies individuellement pour chaque phase soient injectées.

8. Onduleur (2) destiné à l'injection triphasée de puissance électrique à partir d'une source de courant continu (1) dans un réseau triphasé à tension alternative (3), l'onduleur (2) comportant des moyens de mesure de tension (5) pour détecter les tensions de réseau spécifiques à chaque phase (U_abc), une structure de régulation (10) et un pont onduleur (2a), la structure de régulation (10) étant agencée pour recevoir les tensions du réseau (U_abc) mesurées par les moyens de mesure de tension (5), pour exécuter un procédé selon l'une des revendications précédentes et pour délivrer des valeurs de consigne de courant spécifiques à chaque phase (I_abc_soll) au pont onduleur (2a).
